# FASCICULE DE BREVET EUROPEEN

(11) **EP 2 938 920 B1**
(45) Date de publication et mention de la délivrance du brevet: **23.11.2016**
(21) Numéro de dépôt: 13824630.1
(22) Date de dépôt: 24.12.2013
(51) Int. Cl.: F21S 11/00

(54) **DISPOSITIF DE POSITIONNEMENT D'UN ORGANE TRANSMETTEUR D'ENERGIE SOLAIRE PAR RAPPORT A UN CONCENTRATEUR OPTIQUE**
VORRICHTUNG ZUR POSITIONIERUNG EINES ELEMENTS ZUR ÜBERTRAGUNG VON SONNENENERGIE AN EINEN OPTISCHEN KONZENTRATOR
DEVICE FOR POSITIONING A MEMBER FOR TRANSMITTING SOLAR ENERGY RELATIVE TO AN OPTICAL CONCENTRATOR

(30) Priorité: 26.12.2012 FR 1262770
(43) Date de publication de la demande: 04.11.2015
(73) Titulaire: Echy, 77420 Champs Sur Marne (FR)
(72) Inventeur: MARTIN-LAVAL, Quentin, F-75020 Paris (FR); FOURMENT, Paul, F-75005 Paris (FR)
(74) Mandataire: Oudin, Stéphane
(86) Numéro de dépôt international: PCT/FR2013/053261
(87) Numéro de publication internationale: WO 2014/102505

(56) Documents cités:
- EP-A2- 2 325 548
- CA-A1- 2 253 024
- KR-A- 20090 031 223
- US-A- 3 295 913
- US-A- 4 126 379
- US-A1- 2011 067 687
- US-A1- 2012 243 836

## Description

### Domaine technique

La présente invention appartient au domaine du transport et de la distribution de l'énergie solaire, sous forme par exemple de lumière, provenant d'une zone de collecte vers des pièces sombres dépourvues des ouvertures traditionnelles ou en complément de celles-ci, la collecte et le transport étant respectivement réalisés grâce à un concentrateur optique et un organe transmetteur dont l'une des extrémités se trouve en vis-à-vis dudit concentrateur optique et comportant classiquement un faisceau d'au moins une fibre optique. La présente invention concerne plus particulièrement un dispositif de positionnement dudit organe transmetteur par rapport audit concentrateur optique, mais également le procédé de fabrication dudit dispositif de positionnement.

### Technique antérieure

Les sources de lumières permettant d'éclairer l'intérieur d'un bâtiment se répartissent habituellement entre l'éclairage artificiel (e.g. ampoule électrique) et les ouvertures communiquant directement avec l'extérieur.

Toutefois, l'augmentation du coût de l'énergie et les contraintes environnementales rendent de plus en plus inappropriées l'utilisation de l'électricité pour éclairer les différentes pièces d'un bâtiment. Pourtant l'utilisation de l'éclairage artificiel est nécessaire dans de nombreuses pièces où il est impossible de faire des ouvertures communiquant directement vers l'extérieur, c'est notamment le cas des pièces se trouvant à l'intérieur d'un bâtiment ou au sous-sol.

L'énergie solaire propose donc la source d'éclairage la plus économique dont nous disposons. Pourtant, même dans les pièces disposant de fenêtres, celles-ci ne suffisent pas toujours pour apporter un éclairage suffisant. C'est notamment le cas dans les salles de classes où les lumières artificielles sont constamment allumées car la lumière extérieure arrive latéralement et non uniformément.

Afin de répondre à ces différents problèmes, des solutions techniques ont été développées afin de faire parvenir la lumière extérieure dans toutes les pièces avec le confort de l'éclairage artificiel (orientation et puissance constante).

Parmi toutes ces technologies, les puits de lumière sont les plus répandus. Un puits de lumière comprend habituellement une zone de collecte, une zone de transmission et une zone de diffusion, voir US 2012/243836 A1.

La zone de collecte est avantageusement placée sur le toit du bâtiment. De façon simple, elle peut prendre la forme d'une fenêtre de toit ou d'un dôme. Dans les systèmes plus complexes, elle peut également être constituée de concentrateurs optiques capables de collecter et de concentrer le rayonnement solaire et comportant par exemple un ensemble de miroirs et/ou des lentilles.

La lumière collectée est par conséquent concentrée à l'entrée d'organes transmetteurs de lumière, ces derniers permettant de transmettre la lumière jusqu'à la zone de diffusion avec un minimum de perte tout en conservant la spécificité de la lumière naturelle.

L'un des inconvénients des puits de lumière est que leur efficacité peut chuter significativement à cause d'un mauvais positionnement de l'entrée des organes transmetteurs par rapport au concentrateur optique. En effet, si la lumière collectée n'est pas correctement concentrée à l'entrée d'organes transmetteurs de lumière, on comprend bien qu'il y aura inévitablement une perte au niveau de la lumière transmise.

### Exposé de l'invention

Le but de la présente invention est donc de pallier les inconvénients précédemment cités et de proposer un dispositif de positionnement simple, fiable de l'entrée d'un organe transmetteur par rapport au concentrateur optique associé. Ledit dispositif est en outre apte à assurer de façon pérenne la position en un point précis de l'entrée dudit organe transmetteur par rapport aux caractéristiques du concentrateur optique associé.

Conformément à l'invention, il est proposé un dispositif de positionnement de l'entrée d'un organe transmetteur d'énergie solaire par rapport à un concentrateur optique convergent, remarquable en ce qu'il comporte un support muni d'au moins une réservation apte à recevoir et à maintenir le concentrateur optique dans une orientation prédéterminée et permettant le passage de la lumière à travers ledit support, un récepteur apte à recevoir et à maintenir l'entrée de l'organe transmetteur, et au moins un élément entretoise pour maintenir ledit récepteur à distance du support dans une position fixe par rapport à ladite réservation, ladite position fixe étant définie en fonction des caractéristiques des organe transmetteur et concentrateur optique.

Le concentrateur optique est avantageusement une lentille convergente comportant alors deux faces frontales appelées dioptre avant et dioptre arrière, et une face périphérique joignant les deux dioptres avant et arrière.

Le support est de préférence réalisé en béton fibré ultra-haute performance. Jusqu'à présent, les concentrateurs solaires étaient, pour des'raisons de poids, majoritairement réalisés en métal ce qui induit des réglages mécaniques fins et couteux. Les caractéristiques mécaniques du béton fibré permettent d'obtenir une précision équivalente pour un prix largement inférieur. Les déposants ont pu montrer que ce type de matériau est parfaitement adapté à la réalisation de concentrateur solaire et que la densité du béton fibré n'est pas un inconvénient dans ce domaine.

De manière avantageuse, le support est une plaque comportant une face avant, une face arrière, et une face périmétrique joignant lesdites faces avant et arrière.

Le support comporte de préférence des organes de fixation agencés pour permettre la solidarisation du support sur une structure. Selon un mode de réalisation avantageux, la réservation comporte un orifice traversant le support de part en part et un premier lamage aménagé sur la face avant du support coaxialement audit orifice, les sections transversales respectives des orifice et premier lamage étant homothétiques à celle de la face périphérique du concentrateur optique, et les dimensions de la section transversale de l'orifice et du premier lamage étant respectivement légèrement inférieures et supérieures à celles de la section transversale de la face périphérique du concentrateur optique.

Selon un mode de réalisation avantageux, la réservation comporte un second lamage aménagé sur la face avant du support coaxialement au premier lamage.

Le récepteur est de préférence un organe tubulaire comportant des connecteurs femelles ou mâles aptes à coopérer avec des connecteurs mâles ou femelles disposés sur l'entrée de l'organe transmetteur.

De manière avantageuse, chaque entretoise est une tige rigide fixée à ses extrémités respectivement de la face arrière du support et du récepteur.

Selon un autre mode de réalisation, ladite entretoise est co-moulée avec ledit support. Selon un mode de réalisation tout à fait préféré, ledit support et ladite entretoise sont en béton fibré ultra-haute performance.

Selon un autre mode de réalisation, ladite entretoise comprend une pièce tronconique creuse. De façon préférée, ladite pièce tronconique est ouverte sur son plus large diamètre et comprend sur sa base de plus faible diamètre une réservation apte à recevoir ledit récepteur. De façon tout à fait préférée, ladite pièce tronconique comprend au niveau de sa base de plus fort diamètre un épaulement annulaire s'étendant radialement vers l'extérieur de ladite pièce tronconique.

La présente invention concerne également le procédé de fabrication du dispositif de positionnement selon l'invention, remarquable en ce qu'il se compose des étapes suivantes :
- réalisation d'un coffrage sensiblement horizontal déterminant la face avant et la face périmétrique du support du dispositif de positionnement ;
- mise en place dans ledit coffrage d'une (ou des) empreinte(s) correspondant à la forme négative de la (ou des) réservation(s) ;
- mise en place au centre de chaque empreinte d'un organe de pose sensiblement vertical, ledit organe de pose étant dimensionné pour positionner et maintenir le récepteur à sa position finale durant la fabrication du dispositif de positionnement ;
- fixation d'au moins une entretoise sur le récepteur ;
- mise en place d'un récepteur sur l'organe de pose associé ;
- coulage du matériau de béton fibré ultra-haute performance dans le coffrage entre la (ou les) empreinte(s) en prenant soin de noyer l'extrémité libre de chaque entretoise ;
- décoffrage du dispositif de positionnement vers le haut.

Avant l'étape de mise en place de l'organe de pose, le procédé de fabrication comporte de préférence une étape de réalisation dudit organe de pose avec une butée, ladite butée étant disposée le long de l'organe de pose et telle que, lorsque le récepteur est en appui sur elle, il se trouve au point de convergence du faisceau de rayons lumineux issus du concentrateur optique.

Les étapes de réalisation du coffrage et de mise en place de la(les) empreinte(s) sont avantageusement réalisées simultanément.

Selon un mode de réalisation préféré, le procédé selon l'invention comprend en outre, avant l'étape de coulage, une étape de mise en place d'au moins un élément écarteur reliant au moins deux organes de pose et préférentiellement tous les organes de pose. Selon un mode de réalisation encore plus préféré, ledit élément écarteur est une plaque destiné à être placée perpendiculairement auxdits organes de pose. Ladite plaque comprend des alésages aptes à recevoir lesdits éléments écarteurs. Selon un mode de réalisation tout à fait préféré, plusieurs éléments écarteurs sont placés, parallèlement les uns aux autres de part et d'autres dudit coffrage.

Selon un autre mode de réalisation, le procédé de fabrication du dispositif de positionnement selon l'invention est remarquable en ce qu'il se compose des étapes suivantes :
- réalisation d'un coffrage sensiblement parallélépipédique déterminant la face avant et la face périmétrique du support du dispositif de positionnement ;
- mise en place dans ledit coffrage d'une (ou des) empreinte(s) correspondant à la forme négative de la (ou des) réservation(s), de l'entretoise et de l'entrée ;

- coulage du matériau de béton fibré ultra-haute performance dans le coffrage entre la (ou les) empreinte(s) en prenant soin de noyer l'empreinte de l'entrée ;
- décoffrage du dispositif de positionnement vers le haut.

Selon un mode de réalisation encore plus préféré, ledit coffrage est un parallélépipède ouvert sur sa face supérieure et la ou les empreintes forment un cylindre comprenant sur sa face supérieure une empreinte correspondant à la forme négative de ladite entrée.

Selon un autre mode de réalisation, le procédé de fabrication du dispositif de positionnement selon l'invention est remarquable en ce qu'il se compose des étapes suivantes :
- réalisation d'un coffrage sensiblement parallélépipédique déterminant la face avant, une face latérale, et la face arrière du support du dispositif de positionnement ;
- mise en place dans ledit coffrage d'une (ou des) empreinte(s) correspondant à la forme négative de la (ou des) réservation(s), de l'entretoise et de l'entrée ;
- coulage du matériau de béton fibré ultra-haute performance dans le coffrage entre la (ou les) empreinte(s);
- décoffrage du dispositif de positionnement.

Selon un autre mode de réalisation, le procédé de fabrication du dispositif de positionnement selon l'invention est remarquable en ce qu'il se compose des étapes suivantes :
- réalisation d'un moule formant une empreinte ayant en section droite une forme de T et une section transversale circulaire déterminant la face avant, la face arrière et la face périmétrique du support du dispositif de positionnement ;
- coulage du matériau de béton fibré ultra-haute performance dans ledit moule.
- mise en place dans ledit moule d'un contre moule, correspondant à la forme négative de la (ou des) réservation(s), de l'entretoise et de l'entrée ;
- décoffrage du dispositif de positionnement vers le haut par retrait du contre moule, puis par le haut dudit moule.

Selon un mode de réalisation encore plus préféré, ledit contre-moule forme un cylindre comprenant sur sa face inférieure une empreinte correspondant à la forme négative de ladite entrée apte à venir en contact avec la fond dudit moule.

Selon un autre mode de réalisation, le procédé de fabrication du dispositif de positionnement selon l'invention est remarquable en ce qu'il se compose des étapes suivantes :
- réalisation d'un moule formant une empreinte, ayant en section droite une forme de T et une section transversale circulaire, déterminant la face avant, la face arrière et la face périmétrique du support du dispositif de positionnement ;
- mise en place dans ledit moule d'un contre moule, correspondant à la forme négative de la (ou des) réservation(s), de l'entretoise et de l'entrée ;
- coulage du matériau de béton fibré ultra-haute performance dans ledit moule.
- décoffrage du dispositif de positionnement vers le haut par retrait du contre moule, puis par le haut dudit moule.

Selon un mode de réalisation encore plus préféré, ledit contre-moule forme un cylindre comprenant sur sa face inférieure une empreinte correspondant à la forme négative de ladite entrée apte à venir en contact avec la fond dudit moule.

### Description sommaire des figures

D'autres avantages et caractéristiques ressortiront mieux de la description qui va suivre d'un mode d'exécution d'un dispositif de positionnement selon l'invention en référence aux figures annexées sur lesquelles :
- la figure 1 est une vue en perspective d'un dispositif de positionnement selon l'invention ;
- la figure 2 est une coupe verticale du dispositif de positionnement selon l'axe II-II' de la figure 1 ;
- la figure 3 est une vue en perspective d'un coffrage complet utilisé pour la fabrication du dispositif de positionnement de la figure 1 selon un procédé selon l'invention.
- les figure 4a et 4b représentent une vue en coupe droite (4a) et une vue de dessus (4b) d'un coffrage complet utilisé selon un procédé selon l'invention.
- la figure 5 est une vue en coupe d'un moule et d'un contre moule utilisable dans un procédé selon l'invention.

### Meilleure manière de réaliser l'invention technique

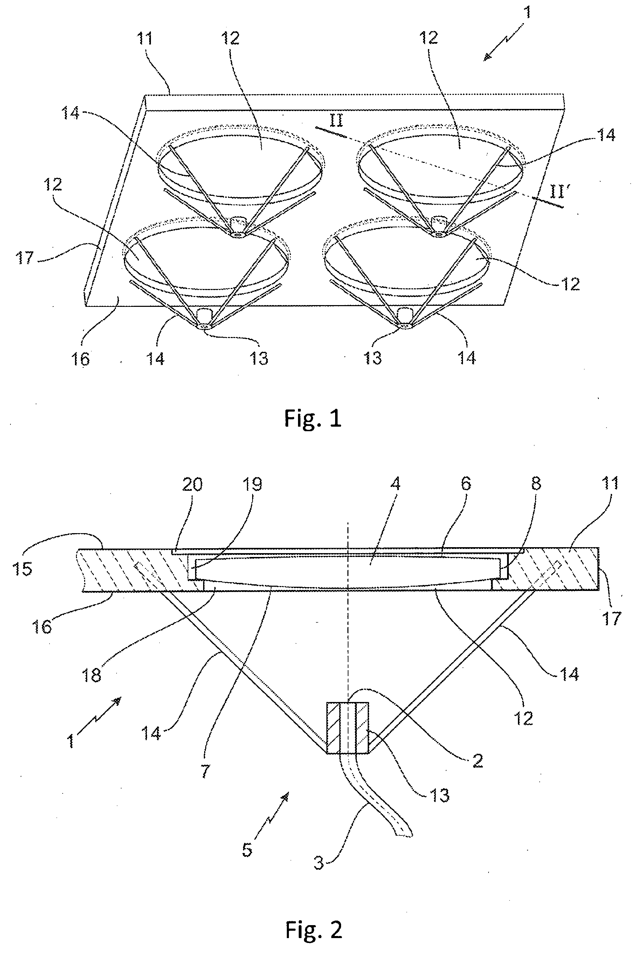

Les figures 1 à 2 représentent un dispositif de positionnement 1 conçu pour positionner en un point fixe une 2 des extrémités, nommée par la suite "entrée", d'un organe transmetteur 3 d'énergie solaire par rapport à un concentrateur optique 4. Ledit organe transmetteur 3 fait de préférence partie d'un système d'éclairage hybride 5 réduisant la consommation d'électricité des éclairages artificiels grâce à l'importation de lumière naturelle. Ladite entrée 3 de l'organe transmetteur 3 est disposée en vis-à-vis dudit concentrateur optique 4

Ledit système d'éclairage hybride 5 comporte en outre un moyen de diffusion (non représenté sur les figures) connecté à l'autre extrémité, nommée par la suite "sortie", de l'organe transmetteur 3 et apte à diffuser dans un local la lumière collectée à l'extérieur par le concentrateur optique 4 et transmise par ledit organe transmetteur 3.

L'organe transmetteur 3 est avantageusement un faisceau d'au moins une fibre optique non représentée sur les figures. En effet, la souplesse des fibres optiques permet de les intégrer dans tous les types de bâtiments quelque soit leur configuration interne.

Toutefois, l'organe transmetteur 3 pourra également être d'un tout autre type et, par exemple, être un tube de transmission aux parois internes hautement réfléchissantes, sans sortir du cadre de la présente invention. Cependant, la rigidité de ce type de tubes de transmission ne permet pas de s'adapter à tous les trajets et tous les types de bâtiments.

Dans la présente description, on décrit préférentiellement un organe transmetteur 3 faisant partie d'un système d'éclairage hybride 5. Toutefois, ledit organe transmetteur 3 pourra, sans sortir du cadre de la présente invention, faire partie d'un tout autre système tel que, par exemple, un système de production d'énergie électrique ou thermique. Dans ce dernier cas, l'organe transmetteur 3 sera alors respectivement une cellule photovoltaïque à concentration ou une cellule thermique.

Le concentrateur optique 4 est avantageusement une lentille convergente, telle que par exemple une lentille de Fresnel, transformant un faisceau de rayons de lumière naturelle sensiblement parallèle, semblable à une onde plane, en un faisceau de rayons lumineux qui convergent vers un point situé en aval de la lentille, ledit point de convergence étant le foyer objet de ladite lentille.

Le concentrateur optique 4 comporte alors deux faces frontales transformant le faisceau de lumière naturelle, appelées dioptre avant 6 et dioptre arrière 7, et une face périphérique 8 joignant les deux dioptres avant 6 et arrière 7.

Les termes avant et arrière sont définis ici en fonction du sens de la lumière naturelle allant du concentrateur optique 4 à l'organe transmetteur 3.

De manière classique, la section transversale de la face périphérique 8 est circulaire. Toutefois, ladite section transversale de la face périphérique 8 pourra également être d'une toute autre forme et, par exemple, être de forme polygonale carrée ou encore triangulaire, sans sortir du cadre de la présente invention.

De même, on a représenté sur les figures une face périphérique 8 globalement tubulaire. Toutefois, pour des raisons de fabrication et de mise en place, ladite face périphérique 8 pourra également être d'un toute autre type et, par exemple, présenter un rebord facilitant sa fixation sur un support, sans sortir du cadre de la présente invention.

Pour garantir une efficacité optimale du système d'éclairage hybride 5, le dispositif de positionnement 1 permet de positionner de manière simple et durable, l'entrée 2 de l'organe transmetteur 3 à une distance prédéterminée du concentrateur optique 4, correspondant sensiblement dans le cas de l'éclairage hybride 5 au foyer dudit concentrateur optique 4.

Toutefois, lorsque l'organe transmetteur 3 fait partie d'un système de production d'énergie électrique ou thermique, l'entrée dudit organe transmetteur 3 ne sera pas nécessairement positionnée au foyer du concentrateur optique 4. En effet, si l'organe transmetteur 3 est une cellule photovoltaïque à concentration, on comprend qu'il sera plus intéressant de concentrer l'énergie solaire sur l'ensemble de la surface de ladite cellule plutôt que sur un point.

Pour cela, en référence aux figures 1 et 2, le dispositif de positionnement 1 comporte un support 11 muni d'au moins une réservation 12 apte à recevoir et à maintenir le concentrateur optique 4 dans une orientation prédéterminée et permettant le passage de la lumière à travers ledit support 11, un récepteur 13 apte à recevoir et à maintenir l'entrée 2 de l'organe transmetteur 3, et au moins un élément entretoise 14 pour maintenir à distance ledit récepteur 13 du support 11 dans une position fixe par rapport à ladite réservation 12, ladite position fixe correspondant au foyer objet dudit concentrateur optique 4.

Le support 11 est une plaque comportant une face avant 15 située du coté opposé au récepteur 13, une face arrière 16 située du coté du récepteur 13, et une face périmétrique 17 joignant lesdites faces avant 15 et arrière 16.

Le support 11 est avantageusement réalisé en matériau de construction composite pour des raisons de tenue dans le temps et de caractéristiques mécaniques.

De préférence, le matériau retenu pour réaliser le support 11 est le béton fibré ultra-haute performance (BFUP). Ce béton est obtenu à partir d'un mélange de granulats de petites dimensions et de fibres synthétiques ou métalliques aggloméré par un liant tel que par exemple du ciment et des adjuvants. Ce béton possède des caractéristiques mécaniques très élevées et une excellente tenue dans le temps due notamment à sa très faible porosité. Toutes les caractéristiques de ce béton permettront de réaliser avec précision des supports 11 très rigides et de grandes dimensions aptes à recevoir plusieurs concentrateurs optiques 4 tout en garantissant un positionnement précis et pérenne de chaque organe transmetteur 3 associé.

En outre, ce type de béton possède également une très bonne coulabilité, ce qui permettra de mettre aisément en oeuvre le procédé de fabrication décrit après.

On désigne ici par béton fibré ultra-haute performance un béton fibré possédant notamment un module d'Young supérieur à 10 GPa (Giga Pascal) et une résistance équivalente en flexion de 5 MPa (Méga Pascal).

La réservation 12 comporte un orifice 18 traversant le support 11 de part en part et dont la section transversale est homothétique à celle de la face périphérique 8 du concentrateur optique 4. La réservation 12 comporte en outre un premier lamage 19 aménagé sur la face avant 15 du support 11 coaxialement audit orifice 18. La section transversale dudit premier lamage 19 est homothétique à celle de la face périphérique 8 du concentrateur optique 4. Toutefois pour des raisons évidentes de support et de dilatation du concentrateur optique 4, les dimensions de la section. transversale de l'orifice 18 et du premier lamage 19 sont respectivement légèrement inférieures et supérieures à celles de la section transversale de la face périphérique 8 du concentrateur optique 4.

Ainsi, le concentrateur optique 4 est mis en place dans le premier lamage 19 de sorte que son dioptre 7 convexe soit en appui sur le bord de l'orifice 15 situé du coté opposé au récepteur 13. Le concentrateur optique 4 est solidarisé sur le support 11 par toute technique appropriée assurant le maintien du concentrateur optique 4 tout en permettant sa dilation telle que, par exemple, le collage, la mise en place de joints semi-rigides ou encore de pattes de fixation.

La réservation 12 comporte de préférence un second lamage 20 aménagé sur la face avant 15 du support 11 coaxialement au premier lamage 19. Ce second lamage 20 est apte à recevoir une plaque transparente, non représentée sur les figures, pour protéger le concentrateur optique 4 contre les intempéries et des chocs éventuels tout en laissant passer la lumière naturelle.

Le support 11 comporte avantageusement des organes de fixation, non représentés sur les figures, tels que des écrous ou des tiges filetées au moins en partie insérés dans ledit support 11 ou encore des orifices, ces organes de fixation permettant la solidarisation du support 11 sur une structure.

Le récepteur 13 est de préférence un organe tubulaire comportant des connecteurs femelle ou mâle, non représentés sur les figures, aptes à coopérer avec des connecteurs mâle ou femelle, non représentés sur les figures, disposés sur l'entrée 2 de l'organe transmetteur 3.

L'entretoise 14 est avantageusement une tige rigide fixée à ses extrémités respectivement de la face arrière 16 du support 11 et du récepteur 13 pour maintenir ce dernier à distance dudit support 11 dans une position fixe par rapport à ladite réservation 12 et donc du concentrateur optique 4, ladite position fixe correspondant dans le cas du système d'éclairage hybride 5 au foyer objet dudit concentrateur optique 4.

Selon un mode de réalisation préféré, l'entretoise 14 comporte un filetage sur au moins son extrémité en contact avec le support 11.

L'Homme du Métier n'aura aucune difficulté pour déterminer ladite position fixe en fonction du type de concentrateur optique 4 et de celui de l'organe transmetteur 3.

Les récepteur 13 et entretoise 14 sont avantageusement métalliques et assemblés par tout moyen approprié tel que le soudage, par exemple.

De manière avantageuse, le dispositif de positionnement 1 comprend quatre entretoises 14 décalées chacune angulairement de 90° par rapport à l'entretoise 14 adjacente.

De manière encore plus avantageuse, le dispositif de positionnement 1 comprend un support 11 avec plusieurs ensembles réservation 12-récepteur 13-entretoise(s) 14 permettant d'associer plusieurs concentrateurs optiques 4 avec plusieurs organes transmetteur 3 afin d'augmenter la quantité de lumière naturelle diffusée à l'intérieur d'un bâtiment et le nombre de zone de diffusion.

Enfin, le dispositif de positionnement 1 selon l'invention sera fixé grâce à ses organes de fixation sur une structure, non représentée, avantageusement solidaire du toit d'un bâtiment. Cette structure sera de préférence mobile pour suivre le déplacement du soleil au cours de la journée.

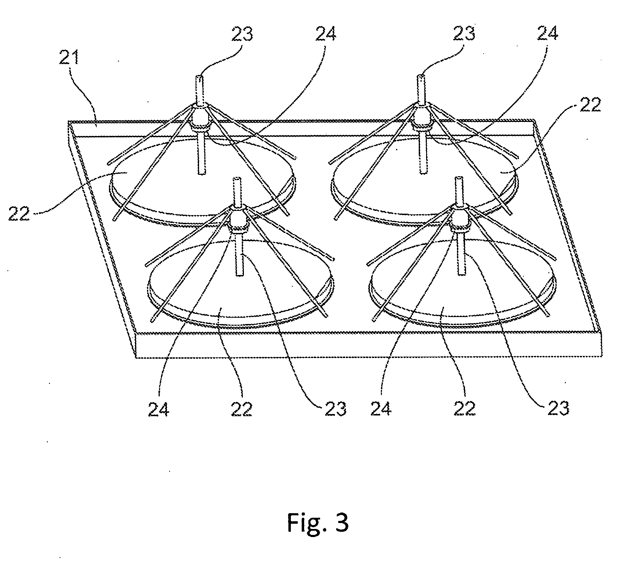

En référence à la figure 3, la présente invention a également pour objet le procédé de fabrication dudit dispositif de positionnement 1 comportant les étapes suivantes :
- réalisation d'un coffrage 21 sensiblement horizontal déterminant la face avant 15 et la face périmétrique 17 du support 11 du dispositif de positionnement 1 ;
- mise en place dans ledit coffrage 21 d'une (ou des) empreinte(s) 22 correspondant à la forme négative de la (ou des) réservation(s) 12 ;
- mise en place au centre de chaque empreinte 22 d'un organe de pose 23 sensiblement vertical, ledit organe de pose 23 étant dimensionné pour positionner et maintenir le récepteur 13 à sa position finale durant la fabrication du dispositif de positionnement ;

- fixation d'au moins une entretoise 14 sur le récepteur 13 ;
- mise en place d'un récepteur 13 sur l'organe de pose 23 associé ;
- coulage du matériau de béton fibré ultra-haute performance dans le coffrage 21 entre la (ou les) empreinte(s) 22 en prenant soin de noyer l'extrémité libre de chaque entretoise 14 ;
- décoffrage du dispositif de positionnement 1 vers le haut.

On comprend bien que les étapes précédemment décrites peuvent ne pas être exécutées dans l'ordre indiqué. Par exemple, la fixation d'au moins une entretoise 14 sur le récepteur 13 peut être réalisée après la mise en place dudit récepteur 13 sur l'organe de pose 23 associé.

De même, on comprend bien qu'avant l'étape de mise en place de l'organe de pose 23, le procédé de montage pourra comporter une étape de réalisation de l'organe de pose 23 avec une butée 24, ladite butée 24 étant disposée le long de l'organe de pose 23 et telle que, lorsque le récepteur 3 est en appui sur elle, il se trouve au point de convergence du faisceau de rayons lumineux issus du concentrateur optique 4.

Les étapes de réalisation du coffrage 21 et de mise en place de la(les) empreinte(s) 22 peuvent être réalisées simultanément, si on obtient lesdits coffrages 21 et empreinte(s) 22 à partir d'une plaque creusée par usinage.

On notera encore que ce procédé de fabrication comporte peu d'étapes et qu'il est particulièrement simple et rapide à mettre en oeuvre.

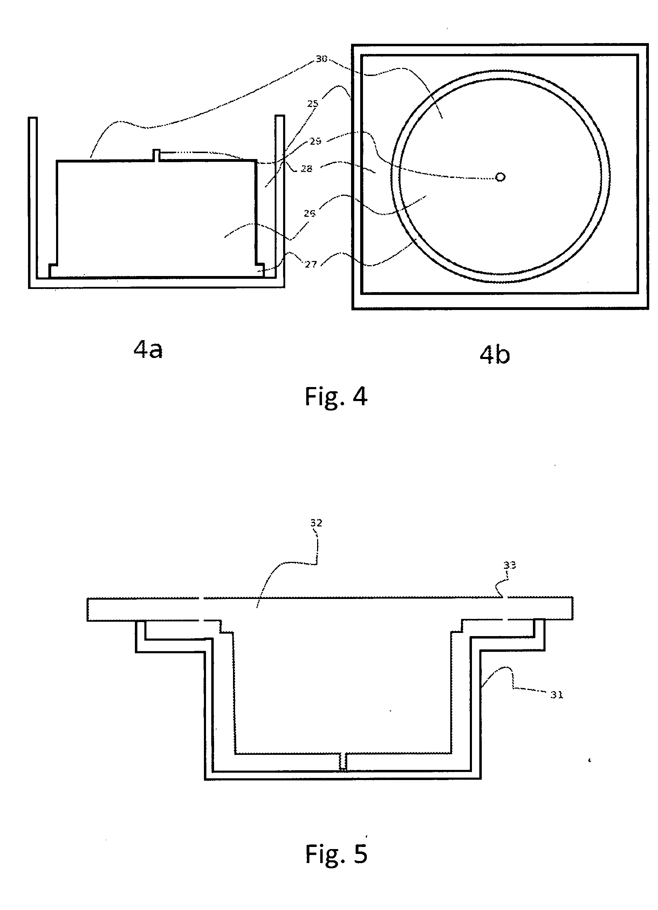

Les figures 4-5 représentent d'autres types de coffrages, d'empreintes, de moules et/ou de contre moules utilisable dans un procédé selon l'invention.

Ainsi la figure 4 présente un coffrage 25 sensiblement parallélépipédique déterminant la face avant et la face périmétrique du support du dispositif de positionnement, une empreinte 26 correspondant à la forme négative de la réservation(s) 27, de l'entretoise 28 et de l'entrée 29. Le coffrage 25 est un parallélépipède ouvert sur sa face supérieure et l'empreinte 26 forme un cylindre comprenant sur sa face supérieure 30 une empreinte 29 correspondant à la forme négative de ladite entrée.

La figure 5 présente un moule 31 formant une empreinte ayant en section droite une forme de T et une section transversale circulaire déterminant la face avant, la face arrière et la face périmétrique du support d'un dispositif de positionnement ; et un contre moule 32, correspondant à la forme négative de la réservation, de l'entretoise et de l'entrée. Le coulage du béton peut se faire via les ouvertures 33, ou par coulage avant dans le moule 31 avant introduction du contre moule 32.

Enfin, on comprend bien que l'utilisation du béton fibré ultra-haute performance comme matériau de construction est très intéressante. En effet, après la prise dudit béton, les entretoises 14 sont solidement ancrées dans le support 1 sans avoir recours à des équipements et des outillages supplémentaires. La prise des entretoises 14 sera d'autant plus forte si ces dernières sont filetées à leur extrémité qui est noyée dans le béton.

### Possibilité d'application industrielle

Le dispositif de positionnement 1 d'un organe transmetteur 3 de lumière par rapport à un concentrateur optique 4 selon l'invention s'applique plus particulièrement aux systèmes d'éclairage hybride 5 tels que des puits de lumières notamment pour des habitations individuelles, mais il peut également être utilisé pour d'autres systèmes tels que des systèmes de production d'énergie électrique ou thermique.

Enfin, il va de soi que les exemples de dispositif de positionnement 1 conformes à l'invention qui viennent d'être décrits ne sont que des illustrations particulières, en aucun cas limitatives de l'invention.

## Revendications

1. Dispositif de positionnement (1) de l'entrée (2) d'un organe transmetteur (3) d'énergie solaire par rapport à un concentrateur optique (4) convergent, comportant un support (11), muni d'au moins une réservation (12) apte à recevoir et à maintenir le concentrateur optique (4) dans une orientation prédéterminée et permettant le passage de la lumière à travers ledit support (11), un récepteur (13) apte à recevoir et à maintenir l'entrée (2) de l'organe transmetteur (3), et au moins un élément entretoise (14) pour maintenir ledit récepteur (13) à distance du support (11) dans une position fixe par rapport à ladite réservation (12), ladite position fixe étant définie en fonction des caractéristiques des organe transmetteur (3) et concentrateur optique (4), **caractérisé en ce que** le support est en béton fibré ultra-haute performance,

2. Dispositif de positionnement (1) selon la revendication 1, **caractérisé en ce que** le concentrateur optique (4) est une lentille convergente comportant alors deux faces frontales appelées dioptre avant (6) et dioptre arrière (7), et une face périphérique (8) joignant les deux dioptres avant (6) et arrière (7).

3. Dispositif de positionnement (1) selon l'une quelconque des revendications 1 à 2, **caractérisé en ce que** le support (11) est une plaque comportant une face avant (15), une face arrière (16), et une face périmétrique (17) joignant lesdites faces avant (15) et arrière (16).

4. Dispositif de positionnement (1) selon l'une quelconque des revendications 1 à 3, **caractérisé en ce que** le support (11) comporte des organes de fixation agencés pour permettre la solidarisation du support (11) sur une structure.

5. Dispositif de positionnement (1) selon les revendications 2 et 4, **caractérisé en ce que** la réservation (12) comporte un orifice (18) traversant le support (11) de part en part et un premier lamage (19) aménagé sur la face avant (15) du support (11) coaxialement audit orifice (18), les sections transversales respectives des orifice (18) et premier lamage (19) étant homothétiques à celle de la face périphérique (8) du concentrateur optique (4), et les dimensions de la section transversale de l'orifice (18) et du premier lamage (19) étant respectivement légèrement inférieures et supérieures à celles de la section transversale de la face périphérique (8) du concentrateur optique (4).

6. Dispositif de positionnement (1) selon la revendication 5, **caractérisé en ce que** la réservation (12) comporte un second lamage (20) aménagé sur la face avant (15) du support (11) coaxialement au premier lamage (19).

7. Dispositif de positionnement (1) selon l'une quelconque des revendications 1 à 6, **caractérisé en ce que** le récepteur (13) est un organe tubulaire comportant des connecteurs femelle ou mâle aptes à coopérer avec des connecteurs mâle ou femelle disposés sur l'entrée (2) de l'organe transmetteur (3).

8. Dispositif de positionnement (1) selon l'une quelconque des revendications 3 à 6, **caractérisé en ce que** chaque entretoise (14) est une tige rigide fixée à ses extrémités respectivement de la face arrière (16) du support (11) et du récepteur (13).

9. Dispositif de positionnement (1) selon l'une quelconque des revendications 3 à 6, **caractérisé en ce que** chaque entretoise est une pièce tronconique creuse ouverte sur son plus large diamètre et comprenant sur sa base de plus faible diamètre une réservation apte à recevoir ledit récepteur.

10. Procédé de fabrication d'un dispositif de positionnement (1) selon l'une quelconque des revendications 3 à 9, **caractérisé en ce qu'**il se compose des étapes suivantes :
- réalisation d'un coffrage (21) sensiblement horizontal déterminant la face avant (15) et la face périmétrique (17) du support (11) du dispositif de positionnement (1) ;
- mise en place dans ledit coffrage (21) d'une (ou des) empreinte(s) (22) correspondant à la forme négative de la (ou des) réservation(s) (12) ;
- mise en place au centre de chaque empreinte (22) d'un organe de pose (23) sensiblement vertical, ledit organe de pose (23) étant dimensionné pour positionner et maintenir le récepteur (13) à sa position finale durant la fabrication du dispositif de positionnement ;
- fixation d'au moins une entretoise (14) sur le récepteur (13) ;
- mise en place d'un récepteur (13) sur l'organe de pose (23) associé ;
- coulage du matériau de béton fibré ultra-haute performance dans le coffrage (21) entre la (ou les) empreinte(s) (22) en prenant soin de noyer l'extrémité libre de chaque entretoise (14) ;
- décoffrage du dispositif de positionnement (1) vers le haut.

11. Procédé de fabrication selon la revendication 10, **caractérisé en ce qu'**avant l'étape de mise en place de l'organe de pose (23) il comporte une étape de réalisation de l'organe de pose (23) avec une butée (24), ladite butée (24) étant disposée le long de l'organe de pose (23) et telle que, lorsque le récepteur (3) est en appui sur elle, il se trouve au point de convergence du faisceau de rayons lumineux issus du concentrateur optique (4).

12. Procédé de fabrication selon l'une quelconque des revendications 10 ou 11, **caractérisé en ce que** les étapes de réalisation du coffrage (21) et de mise en place de la(les) empreinte(s) (22) sont réalisées simultanément.

13. Procédé de fabrication selon l'une quelconque des revendications 10 à 12, **caractérisé en ce qu'**il comprend en outre, avant l'étape de coulage, une étape de mise en place d'au moins un élément écarteur reliant au moins deux organes de pose et préférentiellement tous les organes de pose.

14. Procédé de fabrication d'un dispositif de positionnement (1) selon la revendication 1 **caractérisé en ce qu'**il se compose des étapes suivantes :
- réalisation d'un coffrage sensiblement parallélépipédique déterminant la face avant et la face périmétrique du support du dispositif de positionnement ;
- mise en place dans ledit coffrage d'une (ou des) empreinte(s) correspondant à la forme négative de la (ou des) réservation(s), de l'entretoise et de l'entrée ;
- coulage du matériau de béton fibré ultra-haute performance dans le coffrage entre la (ou les) empreinte(s) en prenant soin de noyer l'empreinte de l entrée ;
- décoffrage du dispositif de positionnement vers le haut.

15. Procédé de fabrication d'un dispositif de positionnement (1) selon la revendication 1 **caractérisé en ce qu'**il se compose des étapes suivantes :
- réalisation d'un coffrage sensiblement parallélépipédique déterminant la face avant, une face latérale, et la face arrière du support du dispositif de positionnement ;
- mise en place dans ledit coffrage d'une (ou des) empreinte(s) correspondant à la forme négative de la (ou des) réservation(s), de l'entretoise et de l'entrée ;
- coulage du matériau de béton fibré ultra-haute performance dans le coffrage entre la (ou les) empreinte(s);
- décoffrage du dispositif de positionnement.

16. Procédé de fabrication d'un dispositif de positionnement (1) selon la revendication 1 **caractérisé en ce qu'**il se compose des étapes suivantes :
- réalisation d'un moule formant une empreinte ayant en section droite une forme de T et une section transversale circulaire déterminant la face avant, la face arrière et la face périmétrique du support du dispositif de positionnement ;
- coulage du matériau de béton fibré ultra-haute performance dans ledit moule.
- mise en place dans ledit moule d'un contre moule, correspondant à la forme négative de la (ou des) réservation(s), de l'entretoise et de l'entrée ;
- décoffrage du dispositif de positionnement vers le haut par retrait du contre moule, puis par le haut dudit moule.

17. Procédé de fabrication d'un dispositif de positionnement (1) selon la revendication 1 **caractérisé en ce qu'**il se compose des étapes suivantes :
- réalisation d'un moule formant une empreinte, ayant en section droite une forme de T et une section transversale circulaire, déterminant la face avant, la face arrière et la face périmétrique du support du dispositif de positionnement ;
- mise en place dans ledit moule d'un contre moule, correspondant à la forme négative de la (ou des) réservation(s), de l'entretoise et de l'entrée ;
- coulage du matériau de béton fibré ultra-haute performance dans ledit moule.
- décoffrage du dispositif de positionnement vers le haut par retrait du contre moule, puis par le haut dudit moule.

## Patentansprüche

1. Vorrichtung zur Positionierung (1) des Eintritts (2) einer Einrichtung zur Übertragung (3) von Sonnenenergie bezüglich eines konvergenten optischen Sammlers (4), aufweisend einen Träger (11), der mit mindestens einer Aussparung (12) versehen ist, die geeignet ist, den optischen Sammler (4) in einer vorbestimmten Orientierung aufzunehmen und zu halten und den Durchgang von Licht durch den Träger (11) hindurch erlaubt, eine Aufnahme (13), die geeignet ist, den Eintritt (2) der Übertragungseinrichtung (3) aufzunehmen und zu halten, und mindestens ein Abstandhalterelement (13), um die Aufnahme (13) in einer Distanz zum Träger (11) in einer festen Position bezüglich der Aussparung (12) zu halten, wobei die feste Position in Abhängigkeit von den Eigenschaften der Übertragungseinrichtung (3) und des optischen Sammlers (4) definiert ist, **dadurch gekennzeichnet, dass** der Träger aus Ultrahochleistungs-Faserbeton besteht.

2. Positionierungsvorrichtung (1) nach Anspruch 1, **dadurch gekennzeichnet, dass** der optische Sammler (4) eine Sammellinse ist, die somit zwei Stirnflächen, die als vordere Grenzfläche (6) und hintere Grenzfläche (7) bezeichnet werden, sowie eine Umfangsfläche (8) aufweist, welche die beiden Grenzflächen, und zwar die vordere (6) und die hintere (7), verbindet.

3. Positionierungsvorrichtung (1) nach einem der Ansprüche 1 bis 2, **dadurch gekennzeichnet, dass** der Träger (11) eine Platte ist, die eine vordere Fläche (15), eine hintere Fläche (16) und eine Umfangsfläche (17) aufweist, welche die vordere Fläche (15) und die hintere Fläche (16) verbindet.

4. Positionierungsvorrichtung (1) nach einem der Ansprüche 1 bis 3, **dadurch gekennzeichnet, dass** der Träger (11) Befestigungseinrichtungen aufweist, die ausgebildet sind, um ein festes Anbringen des Trägers (11) auf einer Struktur zu ermöglichen.

5. Positionierungsvorrichtung (1) nach den Ansprüchen 2 und 4, **dadurch gekennzeichnet, dass** die Aussparung (12) eine Öffnung (18), die sich durch den Träger (11) von der einen zur anderen Seite hindurch erstreckt, und eine erste Senkung (19) aufweist, die auf der vorderen Fläche (15) des Trägers (11) koaxial zur Öffnung (18) angeordnet ist, wobei die jeweiligen Transversalschnitte der Öffnung (18) und der ersten Senkung (19) Homothetie zum Transversalschnitt der Umfangsfläche (8) des optischen Sammlers (4) aufweisen, und die Abmessungen des Transversalschnitts der Öffnung (18) und der ersten Senkung (19) geringfügig kleiner bzw. größer als die des Transversalschnitts der Umfangsfläche (8) des optischen Sammlers (4) sind.

6. Positionierungsvorrichtung (1) nach Anspruch 5, **dadurch gekennzeichnet, dass** die Aussparung (12) eine zweite Senkung (20) aufweist, die auf der vorderen Fläche (15) des Trägers (11) koaxial zur ersten Senkung (19) angeordnet ist.

7. Positionierungsvorrichtung (1) nach einem der Ansprüche 1 bis 6, **dadurch gekennzeichnet, dass** die Aufnahme (13) eine röhrenförmige Einrichtung ist, die eine Steckbuchse oder einen Stecker aufweist, die/der mit einem Stecker bzw. einer Steckbuchse zusammenarbeiten kann, welche(r) auf dem Eintritt (2) der Übertragungseinrichtung (3) angeordnet ist.

8. Positionierungsvorrichtung (1) nach einem der Ansprüche 3 bis 6, **dadurch gekennzeichnet, dass** es sich bei jedem Abstandhalter (14) um einen starren Stab handelt, dessen Enden jeweils an der hinteren Fläche (16) des Trägers (11) der Aufnahme (13) befestigt sind.

9. Positionierungsvorrichtung (1) nach einem der Ansprüche 3 bis 6, **dadurch gekennzeichnet, dass** jeder Abstandhalter ein hohles kegelstumpfförmiges Teil ist, das an seinem größten Durchmesser offen ist und an seiner einen geringeren Durchmesser aufweisenden Basis eine Aussparung aufweist, die geeignet ist, die Aufnahme aufzunehmen.

10. Verfahren zur Herstellung einer Positionierungsvorrichtung (1) nach einem der Ansprüche 3 bis 9, **dadurch gekennzeichnet, dass** es die folgenden Schritte umfasst:
Ausbilden einer im Wesentlichen horizontalen Schalung (21), welche die vordere Fläche (15) und die Umfangsfläche (17) des Trägers (11) der Positionierungsvorrichtung (1) bestimmt;
Einbringen, in die Schalung (21), eines (oder mehrerer) Abdruckstücke (22), das/die der negativen Form der Aussparung(en) (12) entspricht/entsprechen;
Einbringen, in der Mitte jedes Abdruckstückes (22), einer im Wesentlichen vertikalen Montageeinrichtung (23), wobei die Montageeinrichtung (23) dimensioniert ist, um die Aufnahme (13) während der Herstellung der Positioniervorrichtung in ihrer endgültigen Position zu halten;
Befestigen mindestens eines Abstandhalters (14) auf der Aufnahme (13);
Aufsetzen einer Aufnahme (13) auf die zugehörige Montageeinrichtung (23);
Eingießen des Ultrahochleistungs-Faserbetons in die Schalung (21) zwischen das (oder die) Abdruckstück(e) (22), wobei darauf zu achten ist, dass das freie Ende jedes Abstandhalters (14) eingeformt wird;
Ausschalen der Positioniervorrichtung (1) nach oben.

11. Herstellungsverfahren nach Anspruch 10, **dadurch gekennzeichnet, dass** es vor dem Schritt des Einbringens der Montageeinrichtung (23) einen Schritt beinhaltet, bei dem die Montageeinrichtung (23) mit einem Widerlager (24) ausgebildet wird, wobei das Widerlager (24) entlang der Montageeinrichtung (23) angeordnet ist und es derart angeordnet ist, dass, wenn die Aufnahme (3) auf dieser aufliegt, sie sich im Konvergenzpunkt des aus dem optischen Sammler (4) austretenden Lichtstrahlenbündels befindet.

12. Herstellungsverfahren nach einem der Ansprüche 10 oder 11, **dadurch gekennzeichnet, dass** die Schritte zur Herstellung der Schalung (21) und zum Einbringen des oder der Abdruckstücke (22) gleichzeitig ausgeführt werden.

13. Herstellungsverfahren nach einem der Ansprüche 10 bis 12, **dadurch gekennzeichnet, dass** es weiter, vor dem Einschalungsschritt, einen Schritt aufweist, bei dem mindestens ein Distanzelement eingebracht wird, das mindestens zwei Montageeinrichtungen, und vorzugsweise alle Montageeinrichtungen, verbindet.

14. Verfahren zur Herstellung einer Positionierungsvorrichtung (1) nach Anspruch 1, **dadurch gekennzeichnet, dass** es die folgenden Schritte umfasst:
Ausbilden einer im Wesentlichen parallelepipedförmigen Schalung, welche die vordere Fläche und die Umfangsfläche des Trägers der Positionierungsvorrichtung bestimmt;
Einbringen, in die Schalung, eines (oder mehrerer) Abdruckstücke, das/die der negativen Form der Aussparung(en), des Abstandhalters und des Eintritts entspricht/entsprechen;
Eingießen des Ultrahochleistungs-Faserbetons in die Schalung zwischen das (oder die) Abdruckstück(e), wobei darauf zu achten ist, dass das Abdruckstück des Eintritts eingeformt wird;
Ausschalen der Positioniervorrichtung nach oben.

15. Verfahren zur Herstellung einer Positionierungsvorrichtung (1) nach Anspruch 1, **dadurch gekennzeichnet, dass** es die folgenden Schritte umfasst:
Ausbilden einer im Wesentlichen parallelepipedförmigen Schalung, welche die vordere Fläche, eine Seitenfläche und die hintere Fläche des Trägers der Positionierungsvorrichtung bestimmt;
Einbringen, in die Schalung, eines (oder mehrerer) Abdruckstücke, das/die der negativen Form der Aussparung(en), des Abstandhalters und des Eintritts entspricht/entsprechen;
Eingießen des Ultrahochleistungs-Faserbetons in die Schalung zwischen das (oder die) Abdruckstück(e), wobei darauf zu achten ist, dass das Abdruckstück des Eintritts eingeformt wird;
Ausschalen der Positioniervorrichtung.

16. Verfahren zur Herstellung einer Positioniervorrichtung (1) nach Anspruch 1, **dadurch gekennzeichnet, dass** es die folgenden Schritte umfasst:
Ausbildung einer Gussform, die ein Abdruckstück ausbildet, das einen T-förmigen Querschnitt und einen kreisförmigen Transversalschnitt aufweist, wodurch die vordere Fläche, die hintere Fläche und die Umfangsfläche des Trägers der Positioniervorrichtung bestimmt wird;
Eingießen des Ultrahochleistungs-Faserbetons in die Form;
Einbringen, in die Gussform, einer Gegenform, die der negativen Form der Aussparung(en), des Abstandsstücks und des Eintritts entspricht.
Ausschalen der Positioniervorrichtung nach oben durch Zurückziehen der Gegenform, und dann der Gussform nach oben.

17. Verfahren zur Herstellung einer Positioniervorrichtung (1) nach Anspruch 1, **dadurch gekennzeichnet, dass** es die folgenden Schritte umfasst:
Ausbildung einer Gussform, die ein Abdruckstück ausbildet, das einen T-förmigen Querschnitt und einen kreisförmigen Transversalschnitt aufweist, wodurch die vordere Fläche, die hintere Fläche und die Umfangsfläche des Trägers der Positioniervorrichtung bestimmt wird;
Einbringen, in die Gussform, einer Gegenform, die der negativen Form der Aussparung(en), des Abstandsstücks und des Eintritts entspricht.
Eingießen des Ultrahochleistungs-Faserbetons in die Form;
Ausschalen der Positioniervorrichtung nach oben durch Zurückziehen der Gegenform, und dann der Gussform nach oben.

## Claims

1. Device (1) for positioning the intake (2) of a member for transmitting solar energy (3) relative to a convergent optical concentrator (4), comprising a mounting (11), provided with at least one reserve (12) suitable for receiving and holding the optical concentrator (4) in a predetermined direction and allowing light to pass through said mounting (11), a receiver (13) suitable for receiving and holding the intake (2) of the transmitting member (3), and at least one spacer element (14) in order to keep said receiver (13) spaced apart from the mounting (11) in a stationary position relative to said reserve (12), said stationary position being defined in accordance with the features of the transmitting member (3) and optical concentrator (4), **characterised in that** said mounting (11) is made of ultra-high-performance fibre concrete.

2. Positioning device (1) according to claim 1, **characterised in that** the optical concentrator (4) is a convergent lens comprising two frontal faces called the front dioptre (6) and rear dioptre (7), and a peripheral face (8) joining the two front (6) and rear (7) dioptres.

3. Positioning device (1) according to any of claims 1 to 2, **characterised in that** the mounting (11) is a plate comprising a front face (15), a rear face (16), and a perimetric face (17) joining said front (15) and rear (16) faces.

4. Positioning device (1) according to any of claims 1 to 3, **characterised in that** the mounting (11) comprises fixing members arranged to enable the securing of the mounting (11) on a structure.

5. Positioning device (1) according to claims 2 and 4, **characterised in that** the reserve (12) comprises an orifice (18) passing through the mounting (11) on either side and a first countersink (19) formed on the front face (15) of the mounting (11) coaxially with said orifice (18), the respective transverse sections of the orifices (18) and first countersink (19) being homothetic to that of the peripheral face (8) of the optical concentrator (4), and the dimensions of the transverse section of the orifice (18) and the first countersink (19) being respectively slightly less and greater than those of the transverse section of the peripheral face (8) of the optical concentrator (4).

6. Positioning device (1) according to claim 5, **characterised in that** the reserve (12) comprises a second countersink (20) formed on the front face (15) of the mounting (11) coaxially with the first countersink (19).

7. Positioning device according to any of claims 1 to 6, **characterised in that** the receiver (13) is a tubular member comprising female or male connectors suitable for engaging with male or female connectors arranged on the intake (2) of the transmitting member (3).

8. Positioning device (1) according to any of claims 3 to 6, **characterised in that** each spacer (14) is a rigid rod fixed at the ends thereof respectively to the rear face (16) of the mounting (11) and the receiver (13).

9. Positioning device (1) according to any of claims 3 to 6, **characterised in that** each spacer is a hollow truncated cone-shaped part open on the greater diameter thereof and comprising on the base having a lesser diameter thereof a reserve suitable for receiving said receiver.

10. Method for manufacturing the positioning device (1) according to any of claims 3 to 9, **characterised in that** it consists of the following steps:
- producing substantially horizontal formwork (21) determining the front face (15) and the perimetric face (17) of the mounting (11) of the positioning device (1);
- positioning, in said formwork (21), one (or more) cavity/cavities (22) corresponding to the negative shape of the reserve(s) (12);
- positioning at the centre of each cavity (22) a substantially vertical laying member (23), said laying member (23) being designed to position and hold the receiver (13) in the final position thereof during the manufacture of the positioning device;
- fixing at least one spacer (14) on the receiver (13);
- positioning a receiver (13) on the associated laying member (23);
- casting ultra-high-performance fibre concrete material into the formwork (21) between the cavity/cavities (22) taking care to embed the free end of each spacer (14);
- removing the formwork from the positioning device (1) in the upward direction.

11. Manufacturing method according to claim 10, **characterised in that**, before the step for positioning the laying member (23), it comprises a step for producing the laying member (23) with an abutment (24), said abutment (24) being arranged along the laying member (23) and such that, when the receiver (3) is bearing thereon, it is situated at the point of convergence of the beam of light rays from the optical concentrator (4).

12. Manufacturing method according to any of claims 10 or 11, **characterised in that** the steps for producing the formwork (21) and positioning the cavity/cavities (22) are carried out simultaneously.

13. Manufacturing method according to any of claims 10 to 12, **characterised in that** it further comprises, before the casting step, a step for positioning at least one separating element connecting at least two laying members and preferentially all the laying members.

14. Method for manufacturing a positioning device (1) according to claim 1 **characterised in that** it consists of the following steps:
- producing substantially parallelepipedic formwork determining the front face and the perimetric face of the mounting of the positioning device;
- positioning, in said formwork, one (or more) cavity/cavities corresponding to the negative shape of the reserve(s), spacer and intake;
- casting ultra-high-performance fibre concrete material into the formwork between the cavity/cavities taking care to embed the cavity of the intake;
- removing the formwork from the positioning device in the upward direction.

15. Method for manufacturing a positioning device (1) according to claim 1 **characterised in that** it consists of the following steps:
- producing substantially parallelepipedic formwork determining the front face, a side face, and the rear face of the mounting of the positioning device;
- positioning, in said formwork, one (or more) cavity/cavities corresponding to the negative shape of the reserve(s), spacer and intake;
- casting ultra-high-performance fibre concrete material into the formwork between the cavity/cavities;
- removing the formwork from the positioning device.

16. Method for manufacturing a positioning device (1) according to claim 1 **characterised in that** it consists of the following steps:
- producing a mould forming a cavity having a T-shaped cross-section and a circular transverse section determining the front face, rear face and perimetric face of the mounting of the positioning device;
- casting ultra-high-performance fibre concrete material into said mould;
- positioning, in said mould, a countermould, corresponding to the negative shape of the reserve(s), spacer and intake;
- removing the formwork from the positioning device in the upward direction by removing the countermould, and then from said mould in the upward direction.

17. Method for manufacturing a positioning device (1) according to claim 1, **characterised in that** it consists of the following steps:
- producing a mould forming a cavity, having a T-shaped cross-section and a circular transverse section determining the front face, rear face and perimetric face of the mounting of the positioning device;
- positioning in said mould a countermould, corresponding to the negative shape of the reserve(s), spacer and intake;
- casting ultra-high-performance fibre concrete material into said mould;
- removing the formwork from the positioning device in the upward direction by removing the countermould, and then from said mould in the upward direction.
